(19) Europäisches Patentamt
European Patent Office
Office européen des brevets

(11) Veröffentlichungsnummer: **0 087 044**
**A1**

(12) # EUROPÄISCHE PATENTANMELDUNG

(21) Anmeldenummer: **83101117.6**

(22) Anmeldetag: **07.02.83**

(51) Int. Cl.³: **C 08 K 5/34**

(30) Priorität: **19.02.82 DE 3206091**

(43) Veröffentlichungstag der Anmeldung:
**31.08.83 Patentblatt 83/35**

(84) Benannte Vertragsstaaten:
**CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Wehling, Bernhard, Dr.**
**Im Vogelsang 5**
**D-5060 Bergisch Gladbach 1(DE)**

(54) **Verfahren zum Färben thermoplastischer Kunststoffe in der Masse.**

(57) Verfahren zum Färben thermoplastischer Kunststoffe in der Masse, dadurch gekennzeichnet, daß man Farbstoffe der Formel

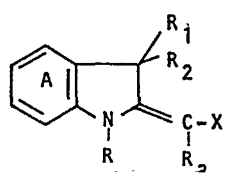

verwendet, in der
X einen Rest

Ia 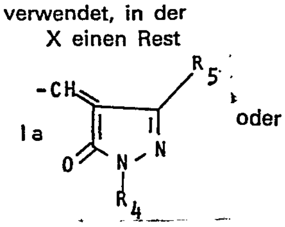 oder 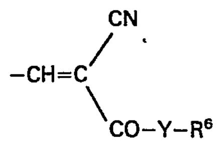 Ib

R Wasserstoff oder Alkyl,
$R_1$, $R_2$ Alkyl,
$R_3$ Wasserstoff, Cyan, Aroyl, Alkoxycarbonyl, Alkylcarbonyl, Carbamoyl,
$R_4$ Aryl,
$R_5$ Alkyl, Alkylcarbonyl, Alkoxycarbonyl, Aryl,
$R_6$ Alkyl, Aryl, Aralkyl, Aralkenyl und
Y O oder $NR_7$ bezeichnen, mit der Bedeutung Wasserstoff, Alkyl, Aralkyl oder Aryl für $R_7$, wobei die für R und $R_1$-$R_7$ genannten C–H– oder N–H–Bindungen enthaltenden Reste substituiert sein können, und wobei der Ring
A 1, 2 oder 3 Substituenten aus der Reihe Halogen, Cyan, Alkyl, Alkoxy, Alkylcarbonyl, Alkoxycarbonyl, Aralkoxycarbonyl, Carbamoyl, Sulfamoyl, Alkylsulfonyl, Arylsulfonyl tragen kann oder an ihn ein Benzolring annelliert sein kann, wobei die als Substituenten des Ringes A genannten C–H– oder N–H–Bindungen enthaltenden Reste substituiert sein können.

EP 0 087 044 A1

BAYER AKTIENGESELLSCHAFT 5090 Leverkusen, Bayerwerk

Zentralbereich
Patente, Marken und Lizenzen PG/ABc

# Verfahren zum Färben thermoplastischer Kunststoffe in der Masse

Die Erfindung betrifft ein Verfahren zum Färben thermoplastischer Kunststoffe in der Masse, das dadurch gekennzeichnet ist, daß man Farbstoffe der Formel

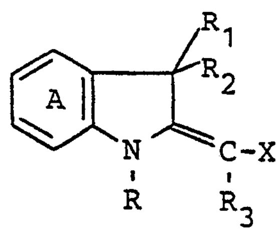

(I)

verwendet, in der

X einen Rest

Ia 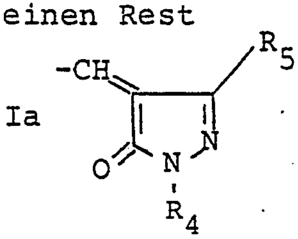 oder 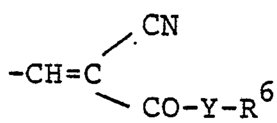 Ib

R Wasserstoff oder Alkyl,

$R_1$, $R_2$ Alkyl,

$R_3$ Wasserstoff, Cyan, Aroyl, Alkoxycarbonyl, Alkylcarbonyl, Carbamoyl,

$R_4$ Aryl,

$R_5$ Alkyl, Alkylcarbonyl, Alkoxycarbonyl, Aryl,

$R_6$ Alkyl, Aryl, Aralkyl, Aralkenyl und

Y O oder $NR_7$ bezeichnen, mit der Bedeutung Wasserstoff, Alkyl, Aralkyl oder Aryl für $R_7$, wobei die für R und $R_1$-$R_7$ genannten C-H- oder N-H-Bindungen enthaltenden Reste substituiert sein können, und wobei der Ring

A 1, 2 oder 3 Substituenten aus der Reihe Halogen, Cyan, Alkyl, Alkoxy, Alkylcarbonyl, Alkoxycarbonyl, Aralkoxycarbonyl, Carbamoyl, Sulfamoyl, Alkylsulfonyl, Arylsulfonyl tragen kann oder an ihn ein Benzolring annelliert sein kann, wobei die als Substituenten des Ringes A genannten C-H- oder N-H-Bindungen enthaltenden Reste substituiert sein können.

Bevorzugt werden in das erfindungsgemäße Verfahren Verbindungen der Formel

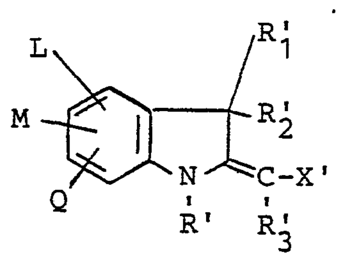

(II)

eingesetzt, in der

X' für

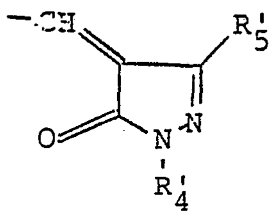

oder

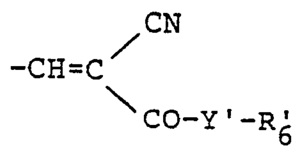

IIa IIb

steht und

R' Wasserstoff, Methyl, Ethyl,

$R_1'$, $R_2'$ Methyl, Ethyl

$R_3'$, Wasserstoff, Cyan, Aroyl, insbesondere Benzoyl und Naphthoyl, Alkoxycarbonyl, insbesondere ($C_1$-$C_4$-Alkoxy)-carbonyl, Carbamoyl,

$R_4'$ Phenyl, das durch Methyl, Ethyl, Methoxy, Ethoxy, Chlor substituiert sein kann,

$R_5'$ Methyl, Methoxycarbonyl, Ethoxycarbonyl, Phenyl, das durch Methyl und/oder Ethyl substituiert sein kann,

$R_6'$ $C_1$-$C_4$-Alkyl, Phenyl, Chlorphenyl, Methylphenyl, Phenyl-$C_1$-$C_3$-alkyl, das im Phenylkern durch Chlor und/oder Methyl substituiert sein kann, Phenylallyl, Phenoxyethyl,

Y' O oder $NR_7'$, wobei

$R'_7$ für Alkyl, insbesondere $C_1$-$C_4$-Alkyl oder Aralkyl, insbesondere Phenyl-$C_1$-$C_3$-alkyl steht,

L Wasserstoff, Chlor, Cyan, Methyl, Ethyl, Methoxy, Ethoxy, Methoxycarbonyl, Ethoxycarbonyl, Benzyloxycarbonyl, gegebenenfalls durch Methyl, Ethyl, Phenyl substituiertes Carbamoyl oder Sulfamoyl, Methylsulfonyl, Phenylsulfonyl und

M, Q Wasserstoff, Methyl, Ethyl, Methoxy, Ethoxy, Chlor oder Methoxycarbonyl bezeichnen und zwei der Substituenten L, M, Q zusammen einen annellierten Benzolring bilden können.

Von besonderem Interesse sind Farbstoffe der Formel II, bei denen

R' Wasserstoff oder Methyl,

$R'_1$, $R'_2$ Methyl,

$R'_3$ Wasserstoff, Cyan, Benzoyl,

$R'_4$ Phenyl, das durch Methyl, Methoxy und/oder Chlor substituiert sein kann,

$R'_5$ Methyl, Methoxycarbonyl,

L Wasserstoff, Methoxycarbonyl, Cyan, Methoxy, Chlor,

M, Q Wasserstoff,

Y' O und

$R_6'$ $C_1$-$C_4$-Alkyl, Phenyl, Chlorphenyl, Methylphenyl, Phenyl-$C_1$-$C_3$-alkyl, dessen Phenylrest durch Chlor oder Methyl substituiert sein kann oder Phenoxyethyl bezeichnen.

Ganz besonders bevorzugt werden in das erfindungsgemäße Verfahren die Verbindungen

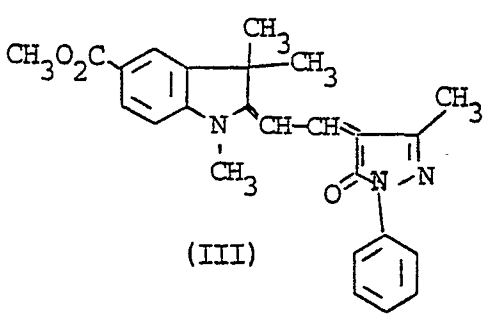

(III)

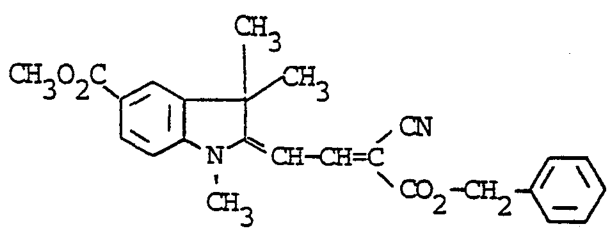

(IV)

eingesetzt.

Die erfindungsgemäß zu verwendenden Methinfarbstoffe stellen bekannte Verbindungen dar. Die Farbstoffe der allgemeinen Formel Ia werden vorteilhaft durch Kondensation von Pyrazolon-4-aldehyden bzw. deren N,N-dialkylsubstituierten Enaminen mit den entsprechenden 2-Methylenindolinen hergestellt (s. DE-AS 1 154 894) oder durch Umsetzung von 2-Methylenindolin-$\omega$-aldehyden mit dem entsprechenden Pyrazolon (s. DE-AS 1 172 487). Die Verbin-

dungen der Formel Ib erhält man durch Kondensation der 2-Methylenindolin-ω-aldehyde mit den entsprechenden Cyanessigsäureestern (s. DE-AS 1 172 387 bzw. 1 569 728).

In den nachfolgenden Tabellen 1 und 2 sind einige besonders geeignete Verbindungen aufgeführt.

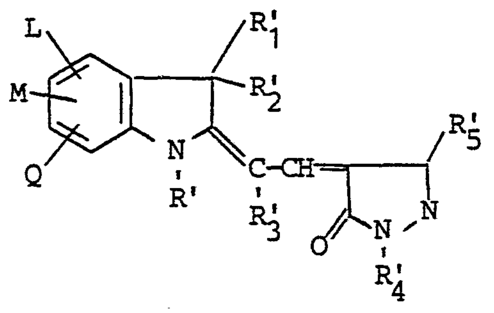

IIa

Tabelle 1

| Verbindung | L | M | Q | R' | $R_1'$ | $R_2'$ | $R_3'$ | $R_4'$ | $R_5'$ | Farbton der Polystyrol-Färbung |
|---|---|---|---|---|---|---|---|---|---|---|
| 1 | H | H | H | $CH_3$ | $CH_3$ | $CH_3$ | H | $C_6H_5$ | $CH_3$ | Orange |
| 2 | 5-$CH_3O$ | H | H | $CH_3$ | $CH_3$ | $CH_3$ | H | $C_6H_5$ | $CH_3$ | Orange |
| 3 | 5-$CH_3O_2C$ | H | H | $CH_3$ | $CH_3$ | $CH_3$ | H | $C_6H_5$ | $CH_3$ | Orange |
| 4 | 5-Cl | H | H | $CH_3$ | $CH_3$ | $CH_3$ | H | $C_6H_5$ | $CH_3$ | Orange |
| 5 | H | H | H | $CH_3$ | $CH_3$ | $CH_3$ | CN | $C_6H_5$ | $CH_3$ | Orange |
| 6 | 5-$CH_3O$ | H | H | $CH_3$ | $CH_3$ | $CH_3$ | CN | $C_6H_5$ | $CH_3$ | Orange |
| 7 | 5-$CH_3O_2C$ | H | H | $CH_3$ | $CH_3$ | $CH_3$ | CN | $C_6H_5$ | $CH_3$ | Orange |
| 8 | 5-Cl | H | H | $CH_3$ | $CH_3$ | $CH_3$ | CN | $C_6H_5$ | $CH_3$ | Orange |
| 9 | H | H | H | $CH_3$ | $CH_3$ | $CH_3$ | H | $C_6H_5$ | $CO_2CH_3$ | gelbstichigrot |
| 10 | 5-$CH_3O$ | H | H | $CH_3$ | $CH_3$ | $CH_3$ | H | $C_6H_5$ | $CO_2CH_3$ | gelbstichigrot |
| 11 | 5-$CH_3O_2C$ | H | H | $CH_3$ | $CH_3$ | $CH_3$ | H | $C_6H_5$ | $CO_2CH_3$ | gelbstichigrot |
| 12 | 5-Cl | H | H | $CH_3$ | $CH_3$ | $CH_3$ | H | $C_6H_5$ | $CO_2CH_3$ | gelbstichigrot |
| 13 | H | H | H | $CH_3$ | $CH_3$ | $CH_3$ | H | p-Tolyl | $CH_3$ | Orange |
| 14 | 5-$CH_3O$ | H | H | $CH_3$ | $CH_3$ | $CH_3$ | H | p-Tolyl | $CH_3$ | Orange |
| 15 | 5-$CH_3O_2C$ | H | H | $CH_3$ | $CH_3$ | $CH_3$ | H | p-Tolyl | $CH_3$ | Orange |
| 16 | 5-Cl | H | H | $CH_3$ | $CH_3$ | $CH_3$ | H | p-Tolyl | $CH_3$ | Orange |

Die in der folgenden Tabelle 2 aufgeführten Farbstoffe färben Polystyrol nach üblichen Verfahren der Massefärbung gelb.

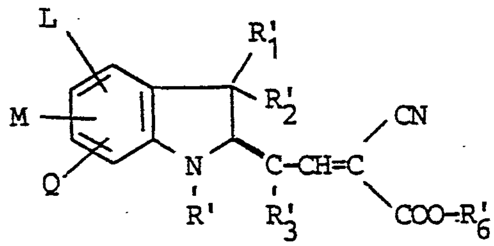

Tabelle 2

| Verbindung | L | M | Q | R' | $R_1'$ | $R_2'$ | $R_3'$ | $R_6'$ |
|---|---|---|---|---|---|---|---|---|
| 17 | H | H | H | $CH_3$ | $CH_3$ | $CH_3$ | H | $C_2H_5$ |
| 18 | 5-$CH_3O$ | H | H | $CH_3$ | $CH_3$ | $CH_3$ | H | $C_2H_5$ |
| 19 | 5-$CH_3O_2C$ | H | H | $CH_3$ | $CH_3$ | $CH_3$ | H | $C_2H_5$ |
| 20 | 5-Cl | H | H | $CH_3$ | $CH_3$ | $CH_3$ | H | $C_2H_5$ |
| 21 | H | H | H | $CH_3$ | $CH_3$ | $CH_3$ | H | $CH_2-C_6H_5$ |
| 22 | 5-$CH_3O$ | H | H | $CH_3$ | $CH_3$ | $CH_3$ | H | $CH_2-C_6H_5$ |
| 23 | 5-$CH_3O_2C$ | H | H | $CH_3$ | $CH_3$ | $CH_3$ | H | $CH_2-C_6H_5$ |
| 24 | 5-Cl | H | H | $CH_3$ | $CH_3$ | $CH_3$ | H | $CH_2-C_6H_5$ |
| 25 | H | H | H | $CH_3$ | $CH_3$ | $CH_3$ | CN | $CH_2-C_6H_5$ |
| 26 | 5-$CH_3O$ | H | H | $CH_3$ | $CH_3$ | $CH_3$ | CN | $CH_2-C_6H_5$ |
| 27 | 5-$CH_3O_2C$ | H | H | $CH_3$ | $CH_3$ | $CH_3$ | CN | $CH_2-C_6H_5$ |
| 28 | 5-Cl | H | H | $CH_3$ | $CH_3$ | $CH_3$ | CN | $CH_2-C_6H_5$ |
| 29 | H | H | H | $CH_3$ | $CH_3$ | $CH_3$ | H | 4-Chlorbenzyl |
| 30 | 5-$CH_3O$ | H | H | $CH_3$ | $CH_3$ | $CH_3$ | H | " |
| 31 | 5-$CH_3O_2C$ | H | H | $CH_3$ | $CH_3$ | $CH_3$ | H | " |
| 32 | 5-Cl | H | H | $CH_3$ | $CH_3$ | $CH_3$ | H | " |
| 33 | H | H | H | $CH_3$ | $CH_3$ | $CH_3$ | H | 2-Chlorbenzyl |
| 34 | 5-$CH_3O$ | H | H | $CH_3$ | $CH_3$ | $CH_3$ | H | " |
| 35 | 5-$CH_3O_2C$ | H | H | $CH_3$ | $CH_3$ | $CH_3$ | H | " |
| 36 | 5-Cl | H | H | $CH_3$ | $CH_3$ | $CH_3$ | H | " |

In das erfindungsgemäße Verfahren können auch Mischungen verschiedener Farbstoffe der Formel I und/oder Mischungen von Farbstoffen der Formel I mit anderen Farbstoffen und/ oder anorganischen bzw. organischen Pigmenten eingesetzt werden.

Als geeignete thermoplastische Kunststoffe seien beispielhaft genannt: Celluloseester wie Cellulosenitrat, Celluloseacetat, Cellulosetriacetat, Celluloseacetobutyrat, Cellulosepropionat, Celluloseether wie Methylcellulose, Ethylcellulose, Benzylcellulose, Polyethylenterephthalat, lineare gesättigte Polyesterharz-Kunststoffe, Polyamide, Anilinharz-Kunststoffe, Polycarbonate, Polyethylen, Polypropylen, Polystyrol, Polyvinylcarbazol, Polyvinylchlorid, insbesondere PVC hart, Polyisobutylen, Polymethacrylate, Polyvinylidenchlorid, Polytetrafluorethylen, Polytrifluorethylen, Polyacrylnitril, Polyoxomethylene, lineare Polyurethane, Polyphenylenoxid, Polysulfone sowie Copolymerisate wie Vinylchlorid-Vinylacetat-Copolymere sowie insbesondere Styrol-Copolymerisate wie Acrylnitril-Butadien-Styrol-Copolymere (ABS), Styrol-Acrylnitril-Copolymere (SAN), Styrol-Butadien-Copolymere (SB) und Styrol-α-Methylstyrol-Copolymere(SMS).

Das neue Verfahren eignet sich insbesondere zur Massefärbung von Polystyrol und Styrol-Copolymerisaten insbesondere ABS.

Die erhaltenen Färbungen zeichnen sich durch gute Licht-

und Wetterechtheiten aus. Überraschenderweise besitzen die erfindungsgemäßen Farbstoffe in den thermoplastischen Kunststoffen ausgesprochen hohe Hitze- und Sublimationsbeständigkeiten.

In der US-PS 2 840 443 werden Methinfarbstoffe, zum Beispiel der Formel

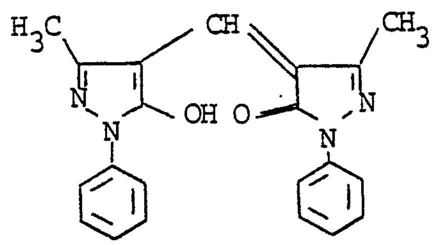

für die Einfärbung von synthetischen, polymeren, thermoplastischen Materialien vorgeschlagen. Demgegenüber zeichnen sich die erfindungsgemäß zu verwendenden Farbstoffe durch wesentlich höhere Hitzebeständigkeiten, aus. Dieses ist bei der technischen Verarbeitung von ausschlaggebender Bedeutung. Nach dem Stand der Technik war dieser Vorteil nicht vorhersehbar und ist demnach als überraschend zu bezeichnen.

Beispiel 1

0,1 Gew.-Teil des Farbstoffs der Formel

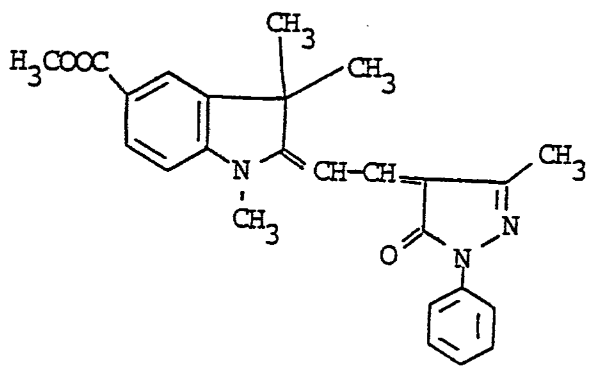

III

2 Gew.-Teile Titandioxid (Bayertitan R-FK-D) und 100 Gew.-Teile eines Polystyrolgranulates werden in einem verschlossenen Gefäß 2 Stunden auf dem Rollbock vermischt. Die erhaltene Mischung wird bei ca. 230°C in Strängen von 2 cm-Breite extrudiert und wieder granuliert. Das Granulat wird mit Hilfe einer Spritzgießmaschine bei 230-240°C zu Formlingen verspritzt. Man erhält orange gefärbte Formlinge mit einer hohen Lichtbeständigkeit.

Beispiel 2

0,05 Gew.-Teile des Farbstoffes der Formel (III) und 100 Gew.-Teile eines Polystyrolgranulates werden in einem verschlossenen Gefäß 2 Stunden auf dem Rollbock vermischt. Das Gemisch wird anschließend bei 230-240°C mit Hilfe einer Spritzgießmaschine zu Formlingen verspritzt. Die orangerot gefärbten, transparenten Formlinge weisen eine hohe Lichtechtheit auf.

Beispiel 3

Ersetzt man den Farbstoff der Formel (III) durch den Farbstoff der Formel

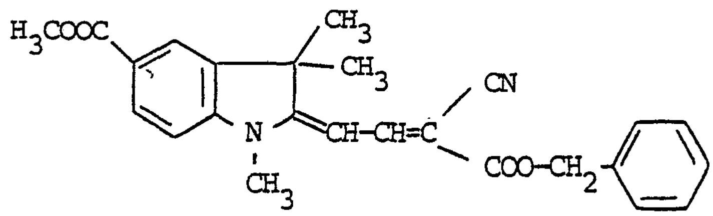

IV

und verfährt im übrigen wie in Beispiel 1 beschrieben, so erhält man grünstichiggelb gefärbte Formlinge mit einer hohen Lichtechtheit.

Beispiel 4

Vermischt man 0,05 Gew.-Teile des Farbstoffes der Formel (IV) und 100 Gew.-Teile eines Polystyrolgranulates und verfährt im übrigen wie in Beispiel 2 beschrieben, so erhält man grünstichiggelb gefärbte Formlinge mit einer hohen Lichtechtheit.

Beispiel 5

Ersetzt man das Polystyrolgranulat durch ein ABS-Granulat und verfährt im übrigen wie in Beispiel 1 beschrieben, so erhält man orange gefärbte Formlinge mit einer hohen Lichtechtheit. Der Farbstoff der Formel (III) kann in ABS noch bei Temperaturen oberhalb von 280°C eingesetzt werden, ohne daß merkliche Farbtonänderungen

auftreten oder eine Sublimation festgestellt werden kann.

Beispiel 6

Vermischt man 0,1 Gew.-Teil des Farbstoffes der Formel (IV), 2 Gew.-Teile Titandioxid (Bayertitan R-FK-D) und 100 Gew.-Teile eines ABS-Granulates und verfährt im übrigen wie in Beispiel 1 beschrieben, so erhält man grünstichiggelb gefärbte Formlinge mit einer hohen Lichtechtheit.

Der Farbstoff der Formel (IV) kann in ABS noch bei Temperaturen oberhalb von 280°C eingesetzt werden, ohne daß merkliche Farbtonänderungen auftreten oder eine Sublimation festgestellt werden kann.

Beispiel 7

Ersetzt man den Farbstoff der Formel (III) durch eine Verbindung der Formel

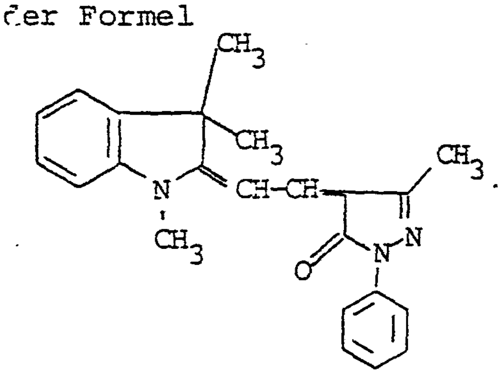

und verfährt im übrigen wie in den Beispielen 1 und 2 beschrieben, so erhält man orange gefärbte, gedeckte

bzw. transparente Formlinge mit einer hohen Lichtechtheit.

Beispiel 8

Verwendet man statt des Farbstoffs der Formel (III) den Farbstoff der Formel

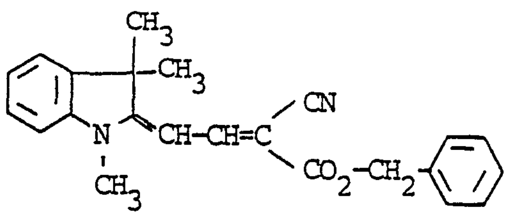

und verfährt im übrigen wie in den Beispielen 1 und 2 beschrieben, so erhält man grünstichiggelb gefärbte, gedeckte bzw. transparente Formlinge mit einer hohen Lichtechtheit.

Patentansprüche

1. Verfahren zum Färben thermoplastischer Kunststoffe in der Masse, dadurch gekennzeichnet, daß man Farbstoffe der Formel

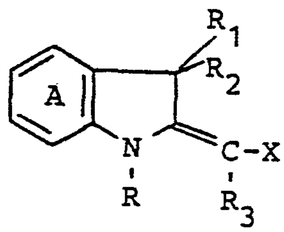

(I)

verwendet, in der

X einen Rest

Ia 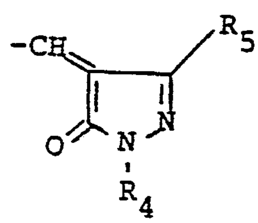 oder 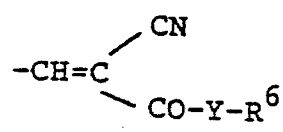 Ib

R Wasserstoff oder Alkyl,

$R_1$, $R_2$ Alkyl,

$R_3$ Wasserstoff, Cyan, Aroyl, Alkoxycarbonyl, Alkylcarbonyl, Carbamoyl,

$R_4$ Aryl,

$R_5$ Alkyl, Alkylcarbonyl, Alkoxycarbonyl, Aryl,

$R_6$ Alkyl, Aryl, Aralkyl, Aralkenyl und

Y O oder $NR_7$ bezeichnen, mit der Bedeutung Wasserstoff, Alkyl, Aralkyl oder Aryl für $R_7$, wobei die für R und $R_1$-$R_7$ genannten C-H- oder N-H-Bindungen enthaltenden Reste substituiert sein können, und wobei der Ring

A 1, 2 oder 3 Substituenten aus der Reihe Halogen, Cyan, Alkyl, Alkoxy, Alkylcarbonyl, Alkoxycarbonyl, Aralkoxycarbonyl, Carbamoyl, Sulfamoyl, Alkylsulfonyl, Arylsulfonyl tragen kann oder an ihn ein Benzolring annelliert sein kann, wobei die als Substituenten des Ringes A genannten C-H- oder N-H-Bindungen enthaltenden Reste substituiert sein können.

2. Verfahren gemäß Anspruch 1, dadurch gekennzeichnet, daß man Verbindungen der Formel

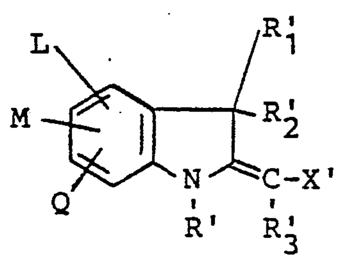

II

verwendet, in der

X' für

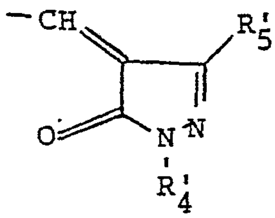

IIa

oder

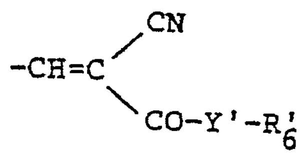

IIb

steht und

R' Wasserstoff, Methyl, Ethyl,

$R_1'$, $R_2'$ Methyl, Ethyl,

$R_3'$ Wasserstoff, Cyan, Aroyl, insbesondere Benzoyl und Naphthoyl, Alkoxycarbonyl, insbesondere $(C_1-C_4$-Alkoxy)-carbonyl, Carbamoyl,

$R_4'$ Phenyl, das durch Methyl, Ethyl, Methoxy, Ethoxy, Chlor substituiert sein kann,

$R_5'$ Methyl, Methoxycarbonyl, Ethoxycarbonyl, Phenyl, das durch Methyl und/oder Ethyl substituiert sein kann,

$R_6'$ $C_1-C_4$-Alkyl, Phenyl, Chlorphenyl, Methylphenyl, Phenyl-$C_1-C_3$-alkyl, das im Phenylkern durch Chlor und/oder Methyl substituiert sein kann, Phenylallyl, Phenoxyethyl,

Y' O oder $NR_7'$, wobei

$R_7'$ für Alkyl, insbesondere $C_1$-$C_4$-Alkyl oder Aralkyl, insbesondere Phenyl-$C_1$-$C_3$-alkyl steht,

L Wasserstoff, Chlor, Cyan, Methyl, Ethyl, Methoxy, Ethoxy, Methoxycarbonyl, Ethoxycarbonyl, Benzyloxycarbonyl, gegebenenfalls durch Methyl, Ethyl, Phenyl substituiertes Carbamoyl oder Sulfamoyl, Methylsulfonyl, Phenylsulfonyl und

M, Q Wasserstoff, Methyl, Ethyl, Methoxy, Ethoxy Chlor oder Methoxycarbonyl bezeichnen und zwei der Substituenten L, M, Q zusammen einen annellierten Benzolring bilden können.

3. Verfahren gemäß den Ansprüchen 1 und 2, dadurch gekennzeichnet, daß man Verbindungen der Formel II verwendet, in der

R' Wasserstoff oder Methyl,

$R_1'$, $R_2'$ Methyl,

$R_3'$ Wasserstoff, Cyan, Benzoyl,

$R_4'$ Phenyl, das durch Methyl, Methoxy und/oder Chlor substituiert sein kann,

$R'_5$ Methyl, Methoxycarbonyl,

L Wasserstoff, Methoxycarbonyl, Cyan, Methoxy, Chlor,

M, Q Wasserstoff,

Y' O, und

$R'_6$ $C_1$-$C_4$-Alkyl, Phenyl, Chlorphenyl, Methylphenyl, Phenyl-$C_1$-$C_3$-alkyl, dessen Phenylrest durch Chlor oder Methyl substituiert sein kann oder Phenoxyethyl bezeichnen.

4. Verfahren gemäß Anspruch 1, dadurch gekennzeichnet, daß man den Farbstoff der Formel

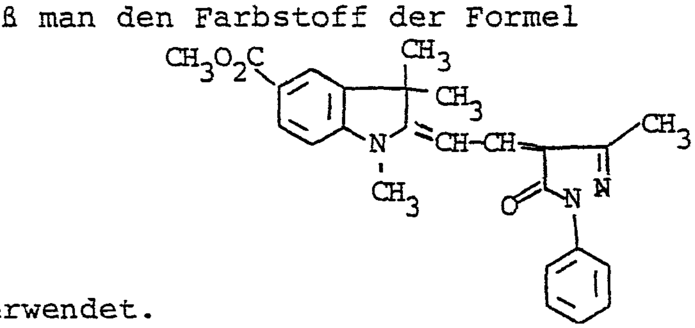

III

verwendet.

5. Verfahren gemäß Anspruch 1, dadurch gekennzeichnet, daß man den Farbstoff der Formel

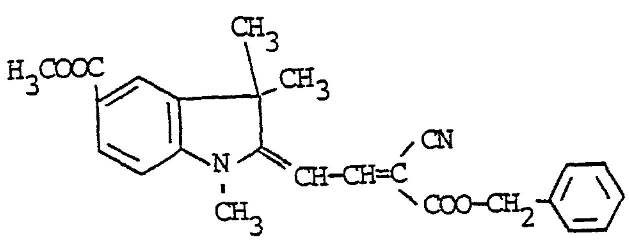

IV

verwendet.

6. Verfahren gemäß den Ansprüchen 1-5 zum Färben von Polystyrol.

7. Verfahren gemäß den Ansprüchen 1-5 zum Färben von Polystyrol-Copolymerisaten.

8. Verfahren gemäß den Ansprüchen 1-5 zum Färben von ABS.

Europäisches Patentamt

# EUROPÄISCHER RECHERCHENBERICHT

0087044

Nummer der Anmeldung

EP 83 10 1117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,D | DE-B-1 154 894 (BAYER AG) * Anspruch; Spalte 3, Zeilen 7,8 * | 1-8 | C 08 K 5/34 |
| | --- | | |
| X,D | DE-B-1 172 387 (BAYER AG) * Anspruch; Spalte 2, Zeilen 37-38 * | 1-8 | |
| | --- | | |
| X,D | DE-B-1 567 728 (BAYER AG) * Ansprüche; Spalte 4, Zeilen 32-33 * | 1-8 | |
| | ----- | | |

RECHERCHIERTE SACHGEBIETE (Int. Cl. 3)

C 08 K
C 09 B

Der vorliegende Recherchenbericht wurde für alle Patentansprüche erstellt.

| Recherchenort | Abschlußdatum der Recherche | Prüfer |
|---|---|---|
| DEN HAAG | 29-04-1983 | HOFFMANN K.W. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82